Europäisches Patentamt

European Patent Office

Office européen des brevets

(11) Publication number: **0 053 512**
A1

# EUROPEAN PATENT APPLICATION

(21) Application number: **81305655.3**

(22) Date of filing: **30.11.81**

(51) Int. Cl.³: **H 01 Q 21/28**, G 01 S 13/76

(30) Priority: **03.12.80 GB 8038746**

(43) Date of publication of application: **09.06.82**
**Bulletin 82/23**

(84) Designated Contracting States: **CH DE FR IT LI NL SE**

(71) Applicant: **THE MARCONI COMPANY LIMITED, Marconi House New Street, Chelmsford Essex CM1 1PL (GB)**

(72) Inventor: **Mark, John Richard, 142, Maldon Road, Great Baddow Chelmsford Essex (GB)**

(74) Representative: **Hoste, Colin Francis et al, Marconi House New Street, Chelmsford Essex CM1 1PL (GB)**

(54) **Secondary radar antenna.**

(57) An auxiliary secondary surveillance radar antenna (2) is intended for use with a main antenna (1) which is capable of being operated in sum and difference modes. The auxiliary antenna (2) augments the difference pattern so as to reduce the likelihood of undesirable signal break through at angles away from the main boresight (6) of the radar. The auxiliary antenna consists of two monopole radiators (10, 11) which are fed in anti-phase and which are provided with suitable reflectors (19) or directors (22), so as to modify in azimuth their radiation patterns. The power fed to each monopole radiator is accurately arranged such that the energy radiated by them exactly coincides in the boresight direction of the radar, but as substantially non-zero values at other directions.

Secondary Radar Antenna

This invention relates to secondary radar antennas and more specifically to an auxiliary transmitting antenna which is intended for use in conjunction with a main secondary surveillance radar antenna.

In a secondary surveillance radar (SSR) pulses transmitted by a base radar station are used to interrogate a target which in turn sends a reply to the base station if it is able and willing to respond to the interrogation pulses. Radar systems of this kind are also sometimes referred to as radar beacon systems (RBS) and they are usually used by base stations on the ground to monitor the movement of aircraft in the vicinity of an airport. The transmitted interrogation pulses trigger the operation of an automatic responder carried by the aircraft which intercept the pulses. When a reply is received at the ground station the range of the aircraft can be deduced from the delay occurring between the transmission of the interrogation pulse and the receipt of the reply. The direction of the aircraft relative to the ground station corresponds to the direction of the radar boresight when the interrogation pulses are transmitted. The boresight continually rotates in azimuth and in order to improve the directional nature of the interrogation, the interrogation pulses consist of a sequence of at least three separate pulses designated P1, P2 and P3 by international convention and it is arranged that the magnitudes of pulses P1 and P3 exceed that of pulse P2 only in the direction of the radar boresight. The transponders carried by aircraft are arranged to respond to the interrogation pulse only when this condition is satisfied, and to suppress any reply when the pulse P2 is of greater magnitude than pulses P1 and P3. Thus when a reply is received by the ground station, the direction of the responding aircraft can be determined.

Sometimes the magnitudes of pulses P1 and P3 may exceed that of pulse P2 at the transponder at directions away from the boresight. This condition is often termed "break through", and it results in transponders at incorrect angular positions replying to interrogations.

It has been found that it is difficult to completely prevent break through using only a main antenna.  Although it has been proposed to use an auxiliary antenna in conjunction with the main antenna so as to further reduce the likelihood of signal break through at angles away from boresight, these auxiliary antennas have not been entirely satisfactory and the present invention seeks to provide an improved auxiliary transmitting antenna for use with a secondary surveillance radar.

According to this invention, an auxiliary transmitting antenna for use with a secondary surveillance radar includes two monopole radiators arranged substantially parallel with each other and mounted on a common ground plane; means for feeding power in anti-phase to each of the two antennas in particular proportions from a common feed point via non-radiating feeders; and at least one elongate director or reflector mounted on said common ground plane and positioned adjacent to one of the monopoles and orientated so as to be substantially parallel with that monopole so as to influence the profile of its radiation pattern.

Preferably the two monopole radiators are fed in anti-phase by arranging that the lengths of the two non-radiating feeders differ by a half wavelength.

Preferably the particular proportion of the available power which each of the two monopole radiators receives for transmission is determined by the impedances of the respective non-radiating feeder which links it to the common feed point.

Although it may be sufficient for one monopole radiator to radiate an angularly symmetrical energy pattern in azimuth (i.e. a true circular pattern) and for the radiated energy pattern of the other monopole radiator to be modified by the presence of a single reflector or director, it is preferred that both monopole radiators produce non-circularly symmetrical patterns.

Thus preferably both monopole radiators are provided with at least one reflector or director, and preferably again at least one of the monopole radiators is provided with both a reflector and a director which are positioned so as to mutually enhance the effect which each produces.

0053512

Preferably the feeders are mounted above and closely adjacent to the common ground plane. They are, of course, electrically insulated from the ground plane and in practice they act as transmission lines whose impedance is primarily determined by the width of the conductive tracks.

In use the auxiliary antenna is preferably mounted so as to be symmetrically placed in relation to a main secondary surveillance radar antenna of the kind having a linear array of radiating elements. The elements can be energised so as to produce a peak signal or a null signal on the radar boresight depending on the phase of the radar energy applied to the different elements.

The invention is further described by way of example with reference to the accompanying drawings in which,

Figure 1 shows in schematic form an antenna assembly including an auxiliary transmitting antenna,

Figure 2 is an explanatory diagram,

Figures 3 and 4 show auxiliary antennas in accordance with the present invention in greater detail and

Figures 5 and 6 are explanatory diagrams relating to Figures 3 and 4 respectively.

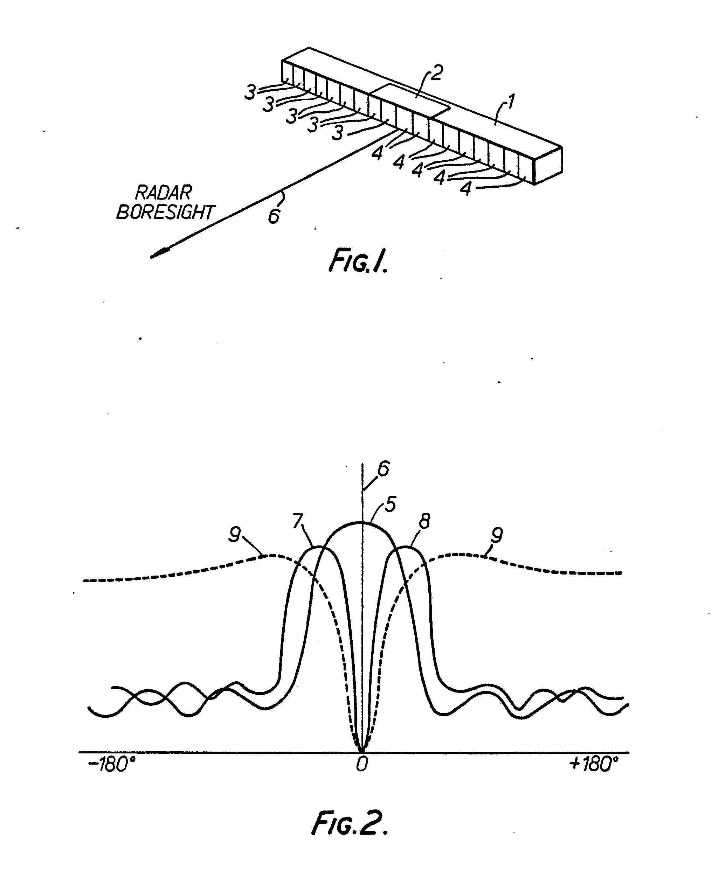

Referring to Figure 1, the secondary surveillance radar antenna assembly consists of two separate antennas, a main antenna 1 and an auxiliary antenna 2 which is mounted immed- iately above the main antenna 1 and positioned centrally so that the boresight of the two antennas coincide in azimuth. The nature of the radiation patterns produced by the two antennas is shown in Figure 1. The main antenna 1 consists of a linear array having a large number of individual radiating elements 3 and 4, the elements 3 being positioned to the left hand side of the antenna and the element 4 being positioned to the right hand side (as viewed in the drawing). When the radiating elements 3 and 4 are energised in phase, the radiation sum pattern 5 is produced and it will be seen that it consists of a highly directional main lobe aligned with the boresight 6 of the radar, but that at angles away from boresight the amplitude is relatively low. When, however, the elements 3 and 4 are energised in anti-phase, the main antenna 1 produces a null on the boresight 6, and a pair of directional lobes 7 and 8 positioned symmetrically about the boresight - this is termed a differencepattern. It will be noted that the two lobes 7 and 8 are mutually in anti-phase, and that at angles away from boresight the amplitude of the anti-phase patterns decreases rapidly. As is well known, the principle of secondary surveillance radar relies on aircraft or the like responding to the interrogation signals transmitted by the radar if the aircraft lies on or very closely adjacent to the boresight of the radar. Thus typically a sequence of three pulses P1, P2, P3 are transmitted by the radar and they are arranged such that pulses P1 and P3 are transmitted in accordance with the main lobe 5, and that they exceed the amplitude of the pulse P2 transmitted in accordance with the anti-phase pattern only on the boresight of the radar antenna. It is only those responders which detect this amplitude relationship, i.e. amplitude of pulses P1 and P3 greater than pulse P1, which respond to the interrogation. However, it will be seen that at angles well away from the boresight of the radar, this amplitude condition is not necessarily satisfied and that some of the minor side lobes of the sum pattern 5 can exceed those of the difference pattern 7, 8. For that reason the auxiliary antenna 2 is provided, and it is arranged to produce a radiation pattern 9, which augments the side lobes of the difference pattern 7 and 8.

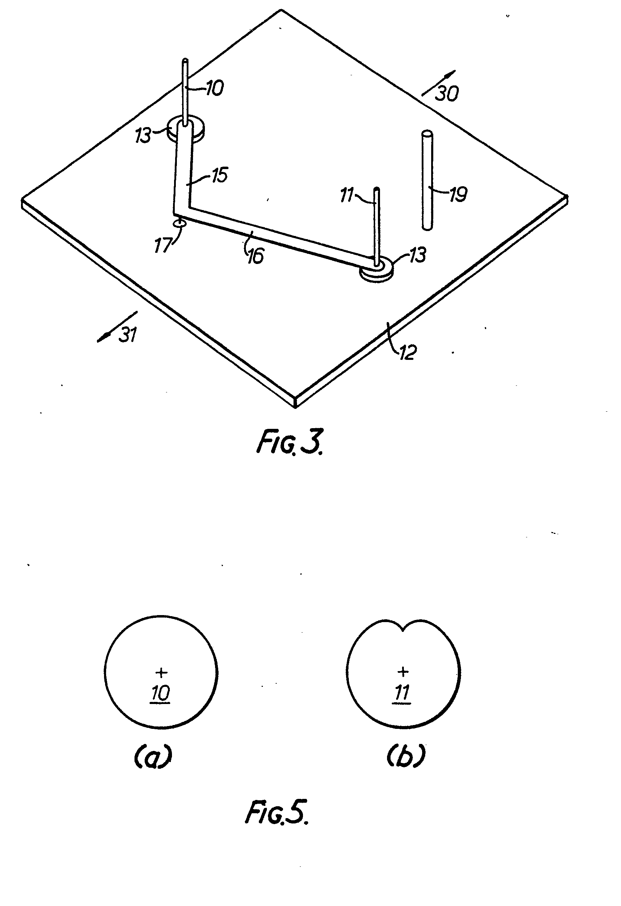

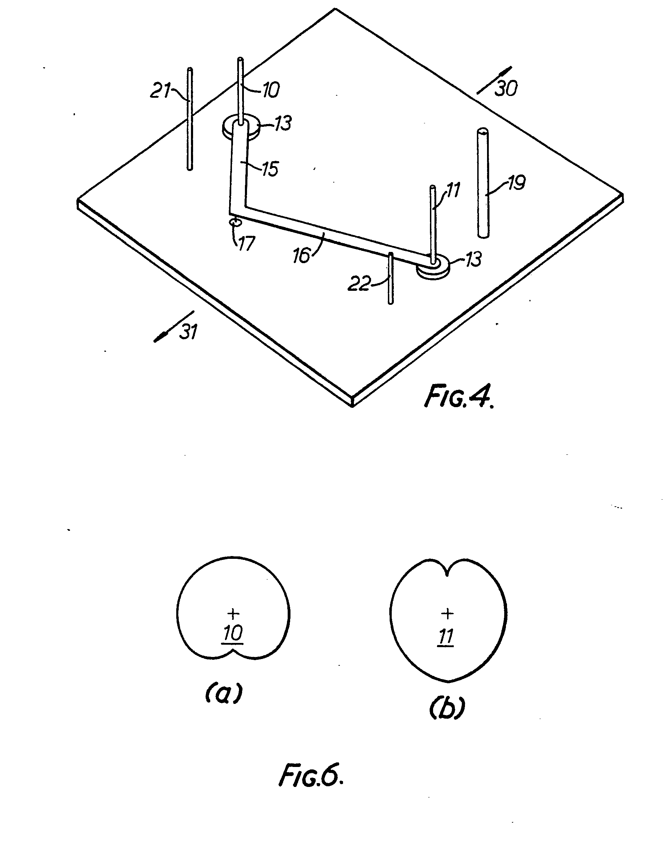

Two examples of auxiliary antennas which are capable of producing a radiation pattern similar to pattern 9 shown in Figure 2 are illustrated in Figures 3 and 4. It will be seen that both auxiliary antennas are similar to each other. Both have two monopole radiators 10 and 11, which are mounted on a common ground plane 12 so as to be electrically insulated therefrom by means of insulating pads 13 and 14. The two monopole radiators consist simply of straight elongate conductors which are parallel to each other and at right angles to the ground plane 12. The two monopole radiators 10 and 11 are coupled by means of transmission line feeders 15 and 16 to a common feed point 17, which represents the end of a co-axial transmission line positioned on the under side of the common ground plane 12. This co-axial transmission line is connected to the radar transmitter, so that the auxiliary antenna transmits the pulse P2 simultaneously with the main antenna.

Secondary surveillance radars are designed to operate at a predetermined centre frequency, and the length of the feeder 16 is arranged to exceed the length of the feeder 15 by half a wavelength of the transmitting frequency so that the monopole radiator 11 transmits in anti-phase with the monopole radiator 10. The two radiators do not transmit equal powers as the impedance of the two feeders 15 and 16 are chosen so as to direct particular proportions of the power to each as required. The two feeders 15 and 16 behave as transmission lines and in practice the impedances are determined primarily by the width of the conductive tracks of the feeders and the spacing above the ground plane 12. The feeders themselves consist simply of conductive strips which are positioned closely adjacent to the upper surface of the common ground plane, but are spaced apart therefrom so as to be electrically insulated from them. By positioning them very close to the surface of the ground plane 12, the feeders 15 and 16 themselves radiate only a negligible amount of power and for practical purposes may be regarded as non-radiating.

In Figure 3, a reflector 19 is positioned adjacent to the monopole 11. The reflector 19 is simply an elongate conductor having one end connected to the common ground plane 12 and which is arranged parallel to the monopole radiator 11. The action of the reflector 19 is to reduce the strength of the radiation pattern in the rearward direction 30 of the auxiliary antenna. In the absence of the reflector 19, each monopole radiator 10 and 11 radiates a circularly symmetrical pattern, each of which is mutually in anti-phase with the other. The effect of the reflector 19 on the radiation pattern of monopole radiator 11 is approximately as shown in Figure 5b. It will be seen that an indentation is produced in the radiation pattern of the monopole radiator 11, whereas the radiation pattern produced by monopole radiator 10 is circularly symmetrical as illustrated in Figure 5a. Since these two radiation patterns are $180^{\circ}$ out of phase, it is arranged that they exactly cancel in the forward direction 31 (which corresponds to the boresight of the radar) to produce the required null as shown in Figure 2. In directions away from the boresight, the two radiation patterns combine to give the necessary resultant profile as shown in Figure 2; that is to say, the pattern 9 of an auxiliary antenna has an amplitude which is greater than that of the sum pattern 5.

The antenna shown in Figure 3 permits only relatively coarse correction of the resultant radiation profile 9 and an improved auxiliary antenna is shown in Figure 4. It will be seen that the basic structure is identical, but that the monopole radiator 10 is provided with a reflector 21 and that the monopole radiator 11 is provided with a director 22 in addition to the reflector 19. The reflector 21 is essentially similar to the reflector 19 and in general a reflector is positioned about a quarter wavelength from its associated monopole and has a length which is greater than a quarter of a wavelength. The direction 22 is also simply an elongate conductor whose lower end is conductively connected to the common ground plane 12, but in this case its length is less than a quarter of a wavelength, and it is positioned also about a quarter wavelength in front of the monopole director 11. The exact positioning and length of the reflectors and director are not critical, and can be modified so as to produce exactly the required resultant radiation pattern. The corresponding radiation patterns produced by the monopole radiators 10 and 11 of the auxiliary antenna shown in Figure 4 is illustrated in Figure 6. This Figure corresponds to Figure 5 except that the radiation pattern a produced by monopole radiator 10 also has an indentation produced by the reflector 21 - the indentation is in the forward direction 31 of the antenna. The action of the director 22 on the radiation pattern of monopole radiator 11 is not to change its basic nature, but simply to enhance the directivity of its pattern, that is to say, the indentation is greatly enhanced - this is shown in Figure 6b.

The relative impedances of the two feeders 15 and 16 are, of course, modified such that the amplitudes of the two radiation patterns exactly cancel in the forward direction. This means that because of the shape of the radiation patterns very much more power must be fed to monopole radiator 10, and typically about twelve times more power is fed to the monopole radiator 10 than is fed to monopole radiator 11. In a typical example, the heights of the monopole radiator 11, the reflector 19 and the director 22 were adjusted to provide a 23 dB back to front ratio and a real input impedance; that is to say, a 23 dB higher radiation strength is provided in the forward direction 31 of the antenna than is provided in the rear direction 30. The heights of the monopole radiator 10 and its associated reflector 21 were adjusted to provide a front to back ratio of about 5 dB, that is to say, a 5 dB higher radiation was produced in the rearward direction 30 than in the forward direction 31.

The auxiliary antenna is capable of providing a versatile and precisely adjustable radiation pattern, which augments the difference pattern produced by the main secondary surveillance radar antenna 1 shown in Figure 1. This allows the performance of the radar to be greatly improved without it being necessary to make major design changes to the main antenna. The main benefits of the improvement stem from the suppression of break through of the radiation patterns at angles away from boresight and substantially increase the likelihood that only aircraft positioned on or very close to the boresight of the radar will respond to interrogations.

8  0053512

Claims:-

1. An auxiliary transmitting antenna for use with a secondary surveillance radar including two monopole radiators arranged substantially parallel with each other and mounted on a common ground plane; means for feeding power in anti-phase of each of the two antennas in particular proportions from a common feed point via non-radiating feeders; and at least one elongate director or reflector mounted on said common ground plane and positioned adjacent to one of the monopoles and orientated so as to be substantially parallel with that monopole so as to influence the profile of its radiation pattern.

2. An antenna as claimed in claim 1 and wherein the two monopole radiators are fed in anti-phase by arranging that the lengths of the two non-radiating feeders differ by a half wavelength.

3. An antenna as claimed in claim 1 or 2 and wherein the particular proportion of the available power which each of the two monopole radiators receives for transmission is determined by the impedances of the respective non-radiating feeder which links it to the common feed point.

4. An antenna as claimed in any of the preceding claims and wherein a reflector or director is associated with each of the monopole radiators so that both radiators individually produce non-circularly symmetrical patterns.

5. An antenna as claimed in claim 4 and wherein at least one of the monopole radiators is provided with both a reflector and a director which are positioned so as to mutually enhance the effect which each produces.

6. An antenna as claimed in any of the preceding claims and wherein the feeders are mounted above and closely adjacent to the common ground plane.

7. A secondary surveillance radar antenna assembly including a main antenna of the kind having a linear array of radiating elements, and an auxiliary transmitting antenna as claimed in any of the preceding claims, the auxiliary antenna being symmetrically placed in relation to the main antenna.

8. An auxiliary transmitter antenna substantially as illustrated in and described with reference to Figure 3 or 4 of the accompanying drawings.

1/3   0053512

RADAR
BORESIGHT

FIG.1.

FIG.2.

−180°   0   +180°

FIG. 3.

(a)  (b)

FIG. 5.

FIG.4.

(a)          (b)

FIG.6.

## DOCUMENTS CONSIDERED TO BE RELEVANT

| Category | Citation of document with indication, where appropriate, of relevant passages | Relevant to claim |
|---|---|---|
| Y | <u>US - A - 3 196 444</u> (D.H. SHINN) <br> * column 3, lines 13 to 19; fig. 1 * <br> -- | 2 |
| Y | <u>US - A - 2 903 695</u> (H.W. JAMIESON) <br> * fig. 3 * <br> -- | 3 |
| Y | <u>US - A - 3 383 694</u> (C.F. STROHMEYER) <br> * column 2, lines 32 to 35; fig. 1 * <br> -- | 4,5 |
| Y | <u>DE - B - 1 012 975</u> (C. LORENZ <br> * fig. 2 * <br> -- | 6 |
| Y | <u>EP - A1 - 0 013 240</u> (THOMSON-CSF) <br> . * page 3, line 30 to page 4, line 4 * <br> -- | 7 |
| Y | <u>DE - B - 1 273 619</u> (TELEFUNKEN) <br> * column 1, line 51; fig. 1 to 3 * <br> -- | 7 |
| A,P | <u>US - A - 4 240 080</u> (O.M. WOODWARD) <br> * fig. 1 to 6 * <br> -- | |
| A | <u>US - A - 2 473 421</u> (E. FUBINI et al.) <br> * fig. 1 * <br> -- | |
| A | <u>DE - B2 - 2 540 763</u> (THOMSON-CSF) <br> * fig. 1 * <br> & FR - A - 2 284 997 <br> -- | |
| A | <u>DE - B2 - 2 540 786</u> (THOMSON-CSF) <br> * fig. 1 * <br> ---- | |

**CLASSIFICATION OF THE APPLICATION (Int. Cl. 3)**

H 01 Q 21/28
G 01 S 13/76

**TECHNICAL FIELDS SEARCHED (Int.Cl. 3)**

G 01 S 13/74
G 01 S 13/76
H 01 Q 21/00
H 01 Q 21/28
H 01 Q 25/00
H 01 Q 25/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 10-02-1982 | BREUSING |